(19) Europäisches Patentamt / European Patent Office / Office européen des brevets

(11) **EP 4 670 855 A1**

(12) **EUROPEAN PATENT APPLICATION**

(43) Date of publication:
**31.12.2025 Bulletin 2026/01**

(21) Application number: **25185016.0**

(22) Date of filing: **24.06.2025**

(51) International Patent Classification (IPC):
**B06B 1/02** (2006.01)    **G08B 29/12** (2006.01)
**G10K 9/122** (2006.01)    **G10K 9/18** (2006.01)
**G08B 17/00** (2006.01)

(52) Cooperative Patent Classification (CPC):
**G10K 9/122; B06B 1/0246; G08B 29/126;
G10K 9/18;** G08B 3/10; G08B 17/00

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **25.06.2024 US 202463663838 P**

(71) Applicant: **Kidde Fire Protection, LLC
Bradenton, FL 34202 (US)**

(72) Inventor: **PATEL, Vipul
Bradenton, 34202 (US)**

(74) Representative: **Dehns
10 Old Bailey
London EC4M 7NG (GB)**

(54) **SOUNDER DEVICE**

(57)    Described herein is a sounder device (100). The sounder device (100) comprises a sounder circuit (100A) that comprises a piezo-electric element (102), a capacitor (106) of a predefined capacitance configured parallel to the sounder circuit (100A), wherein the sounder circuit (100A) is connected to the capacitor (106), and a power source (108) via a switch (110). The sounder device (100) further comprises a controller (112) that is configured to issue a voltage control signal to enable supply of electrical power from the power source (108) to the capacitor (106) to charge the capacitor (106) to a predetermined voltage, and issue a first switching control signal to control switching of the switch (110) at a predetermined duty cycle, to enable the capacitor (106) to supply the predetermined voltage across the sounder circuit (100A) at the predetermined duty cycle, wherein the sounder circuit (100A) is configured to generate acoustic signal of a predefined sound level and tone based on the predetermined voltage being supplied to the sounder circuit (100A) at the predetermined duty cycle.

FIG. 1A

**Description**

**BACKGROUND**

Embodiments described herein relate to the field of sounder devices and more particularly, to a self-testing sounder device with dynamically adjustable sound levels.

**SUMMARY**

According to a first aspect, the invention provides a sounder device comprising a sounder circuit that comprises a piezo-electric element, a capacitor of a predefined capacitance configured parallel to the sounder circuit, wherein the sounder circuit is connected to the capacitor, and a power source via a switch. The sounder device further comprises a controller connected to the capacitor, the sounder circuit, and the switch, wherein the controller comprises a control circuitry comprising one or more processors with an access to a memory storing instructions executable by the processors, which causes the controller to issue a voltage control signal to enable supply of electrical power from the power source to the capacitor to charge the capacitor to a predetermined voltage, and issue a first switching control signal to control switching of the switch at a predetermined duty cycle, to enable the capacitor to supply the predetermined voltage across the sounder circuit at the predetermined duty cycle, wherein the sounder circuit is configured to generate an acoustic signal of a predefined sound level and tone based on the predetermined voltage being supplied to the sounder circuit at the predetermined duty cycle.

Optionally, the sounder circuit comprises an inductor of a predefined inductance configured parallel to the piezo-electric element, wherein the inductor and an internal capacitance of the piezo-electric element creates a resonance circuit that amplifies the voltage being supplied to or applied across the piezo-electric element.

Optionally, the control circuitry of the controller comprises an analog-to-digital converter (ADC) that enables the controller to monitor a state of charge (SOC) or a voltage across the capacitor, and a digital-to-analog converter (DAC) that enables the controller to issue the voltage control signal based on the monitored SOC or voltage, and correspondingly enable the supply of electrical power having predefined attributes to the capacitor to charge and maintain the predetermined voltage across the capacitor.

Optionally, the sounder device comprises a capacitor charging control circuit that is configured to control the supply of the electrical power from the power source to the capacitor to charge the capacitor to the predetermined voltage, wherein the controller is configured to issue a second switching control signal to control switching ON and OFF of the capacitor charging control circuit.

Optionally, the control circuitry of the controller comprises a pulse width modulator (PWM) that is configured to generate and transmit, upon the issue of the first switching control signal, a PWM signal of the predetermined duty cycle to the switch to control the switching ON and OFF of the switch at the predetermined duty cycle.

Optionally, the sounder device is configured to be operated in a self-testing mode, which causes the controller to enable the supply of the predetermined voltage across the sounder circuit while keeping the switch turned OFF or switching the switch at the predetermined duty cycle, monitor one or more of a current drawn by the sounder circuit, and the voltage across the capacitor, detect if the monitored current drawn and/or the monitored voltage exceeds a threshold range, and in response to a positive detection, identify the sounder device to be in a faulty state and correspondingly generate an alert signal.

Optionally, in response to a negative detection, the controller is configured to identify the sounder device to be in a healthy state.

Optionally, during the self-testing mode, the controller is configured to turn OFF the switch and enable the supply of the predetermined voltage across the sounder circuit, detect if the monitored voltage across the capacitor reaches a threshold voltage level after a predefined time from the supply of the predetermined voltage, in response to a negative detection, identify the capacitor to be in the faulty state, and in response to a positive detection, identify the capacitor to be in the healthy state.

Optionally, during the self-testing mode, the controller is configured to operate the switch at the predetermined duty cycle, enable the supply of the predetermined voltage across the sounder circuit, and correspondingly monitor the current drawn by the sounder circuit, and identify the capacitor, the inductor, the switch, and the piezo-electric element to be in the healthy state upon detecting an increase in the current drawn by the sounder circuit.

Optionally, during the self-testing mode, the controller is configured to operate the switch at the predetermined duty cycle, enable the supply of the predetermined voltage across the sounder circuit, and correspondingly monitor the current drawn by the sounder circuit, and identify one or more of the inductor, the switch, and the piezo-electric element to be in the faulty state upon detecting substantially no increase in the current drawn by the sounder circuit.

Optionally, during the self-testing mode, the controller is configured to select the predetermined duty cycle such that the sounder device generates the predefined sound level and tone at a frequency in an inaudible range for humans.

Optionally, during the self-testing mode, the controller is configured to control the switching of the switch at the predetermined duty cycle of 5% and operate the piezo-electric element at a predetermined frequency above 20KHz to generate the predefined sound level and tone above 20KHz.

Optionally, the controller is configured to operate the sounder device in the self-testing mode at a predefined interval.

Optionally, the controller is configured to select the predetermined voltage, and the predetermined duty cycle for the predefined sound level and tone to be generated, based on a database storing details of a plurality of permissible sound levels and tones for one or more jurisdictions and corresponding values of one or more known predetermined voltage levels to be supplied across the sounder circuit at one or more known predetermined duty cycles.

Optionally, the controller is configured to enable one or more users to select the predefined sound level and tone to be generated and compare the selected predefined sound level and tone with the database to determine and select the predetermined voltage and the predetermined duty cycle to generate the selected predefined sound level and tone.

Optionally, the controller is in communication with a mobile device associated with the one or more users, which enables the one or more users to select the predefined sound level and tone to be generated.

Optionally, the sounder device is associated with a fire alarm system, wherein the controller is in communication with a control panel associated with the fire alarm system, which enables the one or more users to select the predefined sound level and tone to be generated and/or the operating jurisdiction of the sounder device.

Optionally, the controller is configured to detect or allow selection of a jurisdiction among the one or more jurisdictions where the sounder device is located; and dynamically select, using the database, the predetermined voltage, and the predetermined duty cycle to generate the predefined sound level and tone for the detected or selected jurisdiction.

Optionally, the sounder device is associated with a hazard detection and alarm system, wherein the controller is in communication with a server associated with the hazard detection and alarm system, which enables the one or more users to select the predefined sound level and tone to be generated and/or the operating jurisdiction of the sounder device.

The foregoing summary is illustrative only and is not intended to be in any way limiting. In addition to the illustrative aspects, embodiments, and features described above, further aspects, embodiments, features, and techniques of the invention will become more apparent from the following description taken in conjunction with the drawings.

## BRIEF DESCRIPTION OF THE DRAWINGS

The accompanying drawings are included to provide a further understanding of the invention and are incorporated in and constitute a part of this specification. The drawings illustrate exemplary embodiments of the invention and, together with the description, serve to explain the principles of the invention.

In the drawings, similar components and/or features may have the same reference label. Further, various components of the same type may be distinguished by following the reference label with a second label that distinguishes among the similar components. If only the first reference label is used in the specification, the description is applicable to any one of the similar components having the same first reference label irrespective of the second reference label.

FIG. 1A illustrates an exemplary circuit diagram of a sounder device.

FIG. 1B illustrates an exemplary equivalent circuit of the sounder device of FIG. 1A.

FIG. 2 illustrates an exemplary detailed circuit diagram depicting functional modules of the sounder device being controlled using a microcontroller.

FIG. 3A illustrates an exemplary plot depicting voltage supplied to the capacitor vs peak-to-peak voltage at 50% switching duty cycle.

FIG. 3B illustrates an exemplary plot depicting the measured sound levels with different tones in the sounder device at a capacitor voltage ranging from 1 to 16 V and a fixed switch duty cycle of 50 %.

FIG. 3C illustrates an exemplary plot depicting the measured sound levels with different tones at a fixed capacitor voltage of 16 V and a switch duty cycle ranging from 10 to 50 %.

FIG. 3D illustrates an exemplary plot depicting the measured sound levels with different tones at a fixed capacitor voltage of 2.8 V and a switch duty cycle ranging from 10 to 50 %.

FIG. 3E illustrates an exemplary plot depicting the average current consumption by the sounder circuit at a fixed capacitor voltage of 16 V and a switch duty cycle ranging from 30 to 50 %.

FIG. 4 illustrates an exemplary wave form of a PWM signal with 5% duty cycle being applied to the switch.

FIGs. 5 and 6 illustrate exemplary plots depicting the variation in the current drawn and the capacitor voltage during the self-testing mode.

FIG. 7 illustrates an exemplary plot depicting the variation in DAC counts during the self-testing mode.

## DETAILED DESCRIPTION

The following is a detailed description of embodiments of the invention depicted in the accompanying drawings. The embodiments are in such detail as to clearly communicate the invention. However, the amount of detail offered is not intended to limit the anticipated variations of embodiments; on the contrary, the intention is to cover all modifications, equivalents, and alternatives falling within the scope of the invention as defined by the appended claims.

Various terms are used herein. To the extent a term used in a claim is not defined below, it should be given the broadest definition persons in the pertinent art have given that term as reflected in printed publications and issued patents at the time of filing.

In the specification, reference may be made to the spatial relationships between various components and to the spatial orientation of various aspects of components as the devices are depicted in the attached drawings. However, as will be recognized by those skilled in the art after a complete reading of the specification, the components of this invention described herein may be positioned in any desired orientation. Thus, the use of terms such as "above," "below," "upper," "lower," "first," "second" or other like terms to describe a spatial relationship between various components or to describe the spatial orientation of aspects of such components should be understood to describe a relative relationship between the components or a spatial orientation of aspects of such components.

Sounders (also known as sounder devices) play an important role in safety systems by alerting individuals during emergencies such as fires or hazards. The primary function of a sounder is to emit a loud, distinctive noise that may be easily recognizable and prompt immediate action. Despite their importance, conventional sounders present several challenges in terms of reliability, maintenance, and operational flexibility.

Conventional sounders include a resistor connected parallel to a piezo-electric element, where electrical power is supplied directly to both the piezo-electric element and the resistor. Further, an electronic switch connecting a power source to the piezo-electric element may be toggled rapidly at a given frequency, inducing vibrations in the piezo-electric element, leading to the generation of sound. The frequency of the sound generated by the piezo-electric element may correspond to the switching frequency or duty cycle of the electronic switch. For instance, to achieve a sound frequency of 1000 Hz, the switch may be toggled 1000 times per second.

One of the issues with conventional sounders may be the difficulty in detecting malfunctions during normal operation. Typically, sounders may only be tested while manufacturing due to the disruptive nature of the noise they produce. Routine testing in operational situations may be impractical, as the loud sounds may cause undue alarm and disturbance. This infrequent testing may lead to undetected failures, compromising the efficacy of the fire alarm systems or hazard detection systems in case of an actual emergency.

Moreover, testing sounders during the manufacturing process presents its own set of challenges. Ensuring each sounder meets operational standards may require specialized listening devices and protective measures for the operators conducting the tests. These requirements may not only add to the complexity of the testing process but may also significantly increase the overall manufacturing costs. The need for protective gear and additional equipment underscores the inefficiency and expense associated with current testing methodologies.

Another limitation of existing sounders is their lack of dynamic sound level adjustment capabilities. Typically, the sound level may be fixed or may only be adjusted through manual interaction with the hardware at the time of manufacturing. This inflexibility may necessitate physical access to the sounder and manual adjustment, which may not only be inconvenient but may also limit the adaptability of the sounder in different environments or situations.

There is, therefore, a need for an improved sounder system that addresses these challenges by enabling reliable, non-disruptive testing during normal operations, reducing manufacturing complexity and costs, and allowing for dynamic adjustment of sound levels.

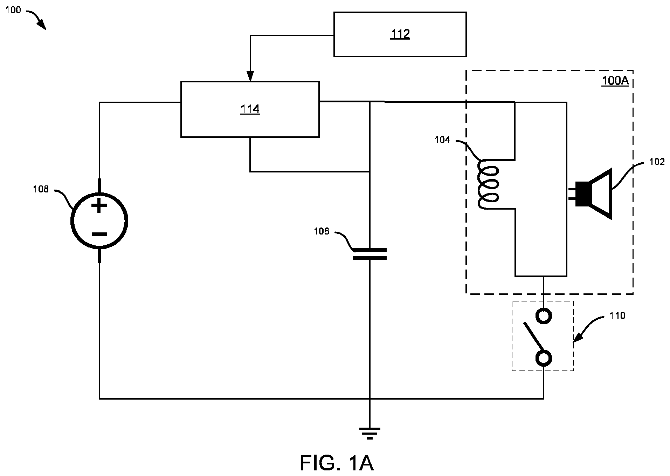

Referring to FIGs. 1A to 2, a sounder device 100 is disclosed. The sounder device 100 may include a piezo-electric element 102 and an inductor 104 of a predefined inductance configured parallel to the piezo-electric element 102 to define a sounder circuit 100A. The sounder device 100 may further include a capacitor 106 of a predefined capacitance configured parallel to the sounder circuit 100A, where the sounder circuit 100A may be connected to the capacitor 106 and a power source 108 via a switch 110 (an electronic switch).

The sounder device 100 may further include a controller 112 connected to the capacitor 106, the sounder circuit 100A, and the switch 110. The controller 112 may comprise a control circuitry comprising one or more processors 112-1 with an access to a memory 112-2 storing instructions executable by the processors 112-1, which may cause the controller 112 to perform one or more designated operations. In one or more embodiments, the controller 112 may be a microcontroller, however, in other embodiments, the controller 112 may be any of an Arduino chipset, Raspberry Pi chipset, a programmable logic controller, and the like, without any limitations.

In one or more embodiments, the controller 112 may be configured to issue a voltage control signal to enable and control the supply of electrical power from the power source 108 to the capacitor 106 to charge the capacitor 106 to a predetermined voltage. Further, the controller 112 may issue a first switching control signal to control the switching of the switch 110 at a predetermined duty cycle, to enable the capacitor 106 to supply the predetermined voltage across the sounder circuit 100A at the predetermined duty cycle. As a result, the sounder circuit 100A may generate an acoustic signal or sound of a predefined sound level and tone based on the predetermined voltage being supplied to the sounder circuit 100A at the predetermined duty cycle.

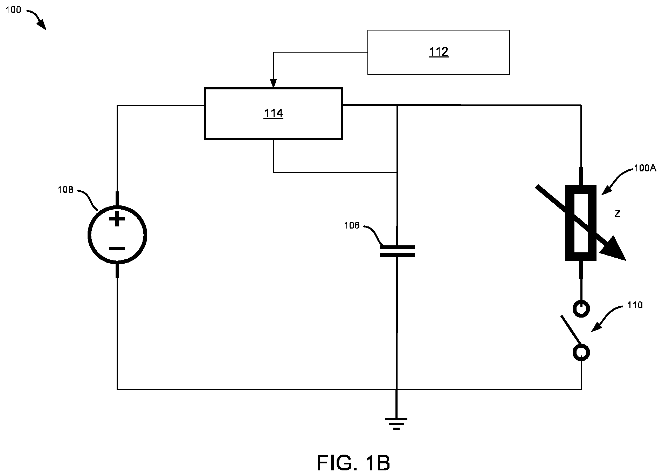

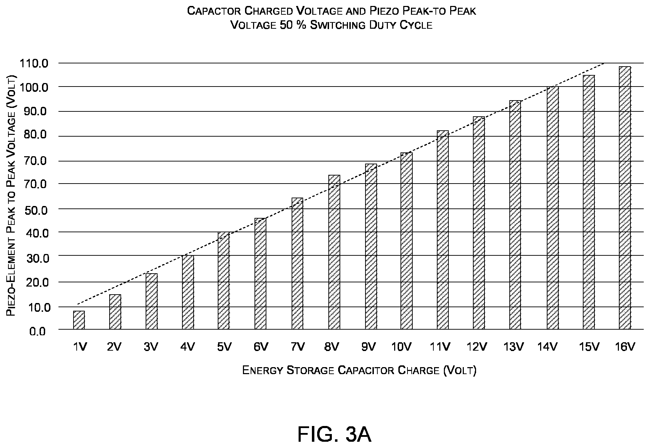

In addition, the inductor 104 and an internal capacitance of the piezo-electric element 102 may create a resonance circuit 100A as shown in FIG. 1B having an effective impedance Z which may amplify the voltage being supplied to or applied across the capacitor 106 or sounder circuit 100A (by nearly seven times as shown in FIG. 3A, without any additional amplifying circuit, thereby applying a significantly higher voltage to the piezo-electric element 102 and correspondingly generating a louder sound compared to the existing sounder circuits having a resistor connected in parallel to the piezo-electric element. The effective impedance (Z) of the circuit 100A is calculated as, $Z = (\frac{Zl*Zc}{Zl+Zc})$, where $Zl$ is inductor impedance and $Zc$ is capacitor impedance.

Referring to FIG. 3A, an exemplary plot depicting voltage supplied to the capacitor vs peak-to-peak voltage across the piezo-electric element at 50% switching duty cycle is disclosed. As illustrated, the peak-to-peak voltage across the piezo-electric element or the capacitor at 50% switching duty cycle of the switch increased from 10 V to 110 V upon increasing the voltage supplied to capacitor from 1V to 16V. Thus, resonance circuit 100A having the effective impedance Z is capable of amplifying the voltage being supplied across sounder circuit 100A by nearly seven to 10 times without any additional amplifying circuit.

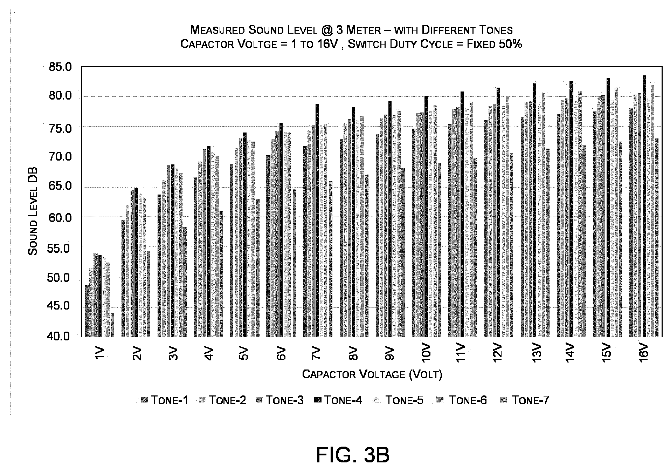

Further, referring to FIG. 3B, an exemplary plot depicting the sound levels for different tones (Tone 1 to Tone 7) measured at a 3 meter distance from the sounder device, at a capacitor voltage ranging from 1 to 16 V and a fixed switch duty cycle of 50 %.is disclosed. As illustrated, the sound level of different tones increased from 45 to 85 dB upon increasing the capacitor voltage from 1V to 16V, where the maximum sound level of individual tones varies as per their frequency.

Moreover, it should be appreciated that the sounder device 100 may utilize the controller 112 and the power supply voltage to initially charge the (energy storage) capacitor 106 and then regulate and apply a variable voltage (0 V to a maximum power supply voltage available) to the piezo-electric element 102 or the sounder circuit 100A. This approach contrasts with the existing sounder circuits that directly apply a fixed voltage from the power source to the piezo-electric element, resulting in a fixed voltage across the existing sounder circuit and fixed sound level generation. As a result, the sounder device 100 of this invention may regulate the capacitor's 106 voltage while the piezo-electric element 102 is active and further regulate the duty cycle of the switch 110, thereby enabling dynamic adjustment and generation of a wide range of sound levels and tones using the same sounder device 100, without any additional amplifying circuit or human intervention. This allows the sounder device 100 to be employed in any country or jurisdiction, where the sound level may be dynamically adjusted as per the regulations of these countries or jurisdictions.

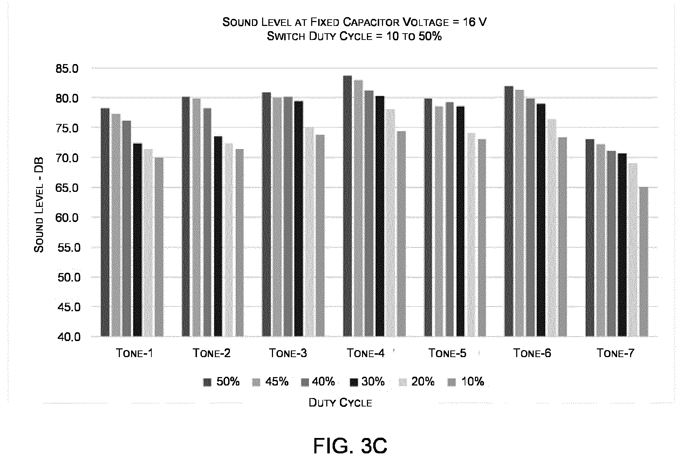

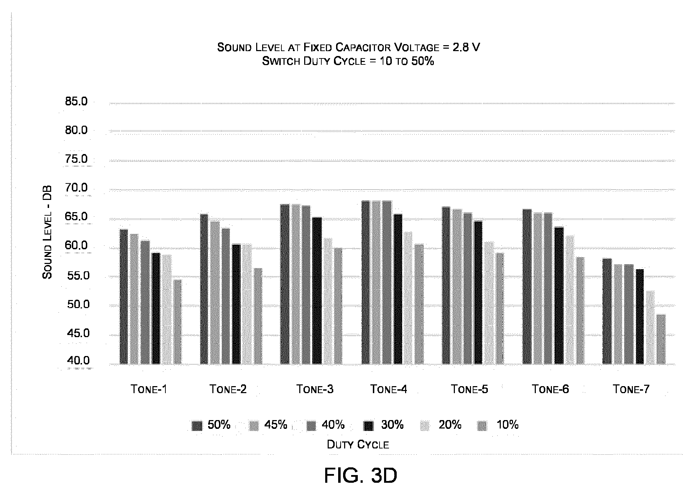

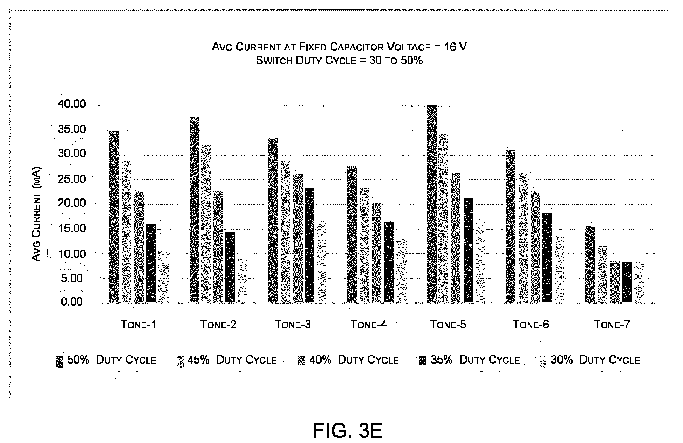

Referring to FIG. 3C, an exemplary plot depicting the measured sound levels with different tones (Tone 1 to Tone 7) at a fixed capacitor voltage of 16 V and a switch duty cycle ranging from 10 to 50 is disclosed, where the maximum sound level of individual tones varies as per their frequency. Further, referring to FIG. 3D, an exemplary plot depicting the measured sound levels with different tones at a fixed capacitor voltage of 2.8 V and a switch duty cycle ranging from 10 to 50 is disclosed, where the maximum sound level of individual tones varies as per their frequency. Furthermore, referring to FIG. 3E, an exemplary plot depicting the average current consumption by the sounder circuit at a fixed capacitor voltage of 16 V and a switch duty cycle ranging from 30 to 50 % is disclosed, where the maximum sound level of individual tones varies as per their frequency.

As can be inferred from FIGs. 3C to 3E, as the voltage across the piezo-electric element 102 increased, the sound level generated may also increase and vice versa as shown in FIG. 3B. Further, as the duty cycle of the electronic switch 110 is increased, the sound level generated may also increase and vice versa as shown in FIGs. 3C and 3D. Further, a higher switching duty cycle of the switch 110 may lead to higher current consumption by the sounder circuit 100A as shown in FIG. 3E. Accordingly, in one or more embodiments, the duty cycle of the switch 110 in this invention may been kept low (5%) for the sound level adjustment as shown in FIG. 3E reduce the overall current consumption by the sounder device 100.

In one or more embodiments, the sounder device 100 may include a capacitor charging control circuit 114 (also referred to as a capacitor charge controller 114) that may be configured to control the supply of electrical power from the power source 108 to the capacitor 106 to control the charging of the capacitor 106. In addition, the sounder device 100 may include a capacitor switching module 202 that may be configured to issue a second switching control signal to switch ON or switch OFF the operation of the capacitor charge controller 114. Further, the sounder device 100 may include a switch control circuit 204 (also referred to as a switch controller 204) that may be configured to control the duty cycle of the switch 110 associated with the sounder circuit 100A. The switch controller 204 may be configured with a pulse width modulator (PWM) 206 (also referred to as PWM controller 206, herein) that may be configured to generate and transmit, upon the issue of the first switching control signal by the controller 112, a PWM signal of the predetermined duty cycle to the switch 110 to control the switching ON and OFF of the switch 110 at the predetermined duty cycle.

In one or more embodiments, the controller 112 may include an analog-to-digital converter (ADC) 208 that may enable the controller 112 to monitor a state of charge (SOC) or a voltage across the capacitor 106. Further, the controller 112 may include a digital-to-analog converter (DAC) 210 that may enable the controller 112 to issue the voltage control signal based on the monitored SOC or voltage, and correspondingly enable the supply of electrical power having predefined attributes (voltage, current, frequency, and/or power), to the capacitor 106 to charge and maintain the predetermined voltage across the capacitor 106.

In one or more embodiments, the capacitor charge controller 114, the capacitor switching module 202, the switch controller 204 or PWM controller 206, the ADC 208, and/or the DAC 210 may be associated with the control circuitry of the controller 112. However, in other embodiments, the capacitor charge controller 114, the capacitor switching module 202, the switch controller 204 or PWM controller 206, the ADC 208, and/or the DAC 210 may be separate components from the controller 112, where the controller 112 may control the operation of one or more of the capacitor charge controller 114, the switch controller 204 or the PWM controller 206, the ADC 208, and the DAC 210.

In one or more embodiments, the sounder device 100 may be configured to be operated in a self-testing mode to diagnose the health of the sounder device 100 and the corresponding components. In the self-testing mode, the controller 112 may enable the supply of the predetermined voltage across the sounder circuit 100A while keeping the switch 110 turned OFF or switching the switch 110 at the predetermined duty cycle, and further monitor one or more of the current drawn by the sounder circuit 100A, and the voltage across the capacitor 106. Further, the controller 112 may check if the monitored current drawn and/or the monitored voltage exceeds a threshold range. Accordingly, in case of a positive detection, if the monitored current drawn and/or the monitored voltage is detected to exceed the threshold range, the controller 112 may identify the sounder device 100 or its components to be in a faulty state and correspondingly generate an alert signal. Further, in case of a negative detection, if the monitored current drawn and/or the monitored voltage is detected to be within the threshold range, the controller 112 may identify the sounder device 100 to be in a healthy state.

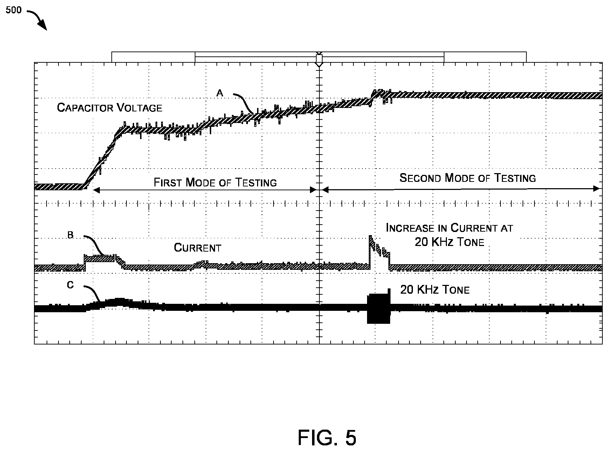

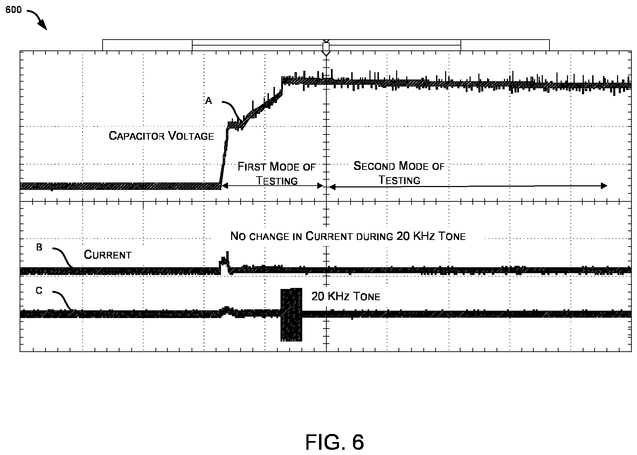

Referring to FIGs. 5 and 6, exemplary plots depicting the variation in the current drawn and the capacitor voltage during the self-testing mode along with the corresponding generated sound tone level are disclosed. As illustrated, the capacitor voltage is depicted as (A), the current drawn by the sounder circuit is depicted as (B), and the generated sound tone level is depicted as (C).

In a first mode of testing, during the self-testing mode, in one or more embodiments, the controller 112 may be configured to turn OFF the switch 110 and enable the supply of the predetermined voltage across the sounder circuit 100A, such that no sound (C) is generated by the sounder circuit 100A or piezo-electric element 102. Further, the controller 112 may check if the monitored voltage (A) across the capacitor 106 reaches a threshold voltage level after a predefined time from the supply of the predetermined voltage. Accordingly, in response to a negative detection where the monitored voltage across the capacitor 106 fails to reach the threshold voltage level after the predefined time, the controller 112 may identify the capacitor 106 to be in a faulty state. Otherwise, in response to a positive detection where the monitored voltage (A) across the capacitor 106 reaches the threshold voltage level after the predefined time, the controller 112 may identify the capacitor 106 to be in a healthy state.

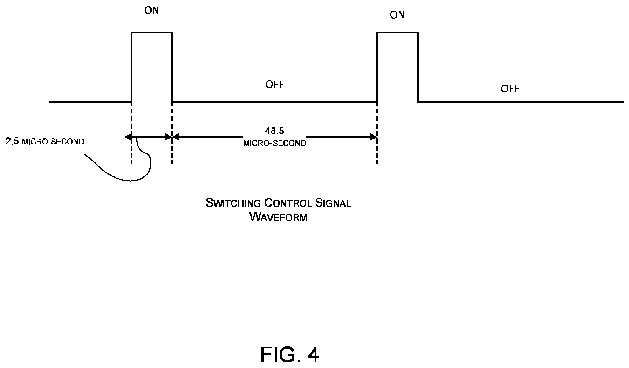

In the first mode of testing, the controller 112 may set the charge controller 114 (or DAC value in the controller 112) such that the voltage (A) across the capacitor 106 reaches a threshold voltage level (say 10 V) after a predefined time (say 1 to 2 seconds). Further, the controller 112 may monitor the capacitor 106 voltage (A) using a feedback loop via the ADC 208 as shown in FIGs. 4 and 5. Later, at the end of the predefined time, if the voltage (A) on the capacitor 106 does not reach the target level (threshold voltage level) then the controller 112 may abort the self-testing and generate an alert to users that the capacitor 106 of the sounder device 100 is malfunctioning.

Further, in a second mode of testing, during the self-testing mode, in one or more embodiments, the controller 112 may be configured to operate the switch 110 at the predetermined duty cycle while enabling the supply of the predetermined voltage across the sounder circuit 100A and further monitor the current (B) drawn by the sounder circuit 100A to check if the capacitor 106, the inductor 104, the switch 110, and/or the piezo-electric element 102 are in a healthy state or malfunctioning (faulty state). In the second mode of testing, the sounder circuit 100A or the piezo-electric element 102 may be set to produce a frequency higher than 20 KHz which cannot be heard by humans, and verify if the sounder device 100 is working or not. For instance, in a nonlimiting example, the electronic switch 110 may be operated at a switching frequency of 20Khz and with a duty cycle of 5% as shown FIG. 4, where the switch 110 may remain ON for 2.5 microseconds and remain OFF for 48.5 microseconds. As a result, the piezo-electric element 102 may start vibrating, producing a sound signal or tone (C) of more than 20 KHz which is inaudible by a human.

Further, in the second mode of testing, if all the sounder device 100 components (the inductor 104, piezo-electric element 102, and the switch 110) are working properly, the piezo-electric element 102 may start vibrating and the combination of an internal capacitance of the piezo-electric element 102 and the inductor 104 may act as a load on the capacitor 106 which may, in turn, increase the current (B) drawn by the sounder circuit 100A as shown in FIG. 5. Accordingly, the controller 112 may identify the capacitor 106, the inductor 104, the switch 110, and the piezo-electric element 102 to be in a healthy state upon detecting an increase in the current drawn by the sounder circuit 100A. Further, the controller 112 may identify one or more of the inductor 104, the switch 110, and the piezo-electric element 102 to be in a faulty state or malfunctioning upon detecting substantially no increase in the current (B) drawn by the sounder circuit 100A as shown in FIG. 6.

In the second mode of testing, if the inductor 104 is broken but the piezo-electric element 102 is working, the piezo-electric element 102 may not vibrate and the load on the capacitor 106 may almost be negligible and there may not be any increase in the load current (B). Similarly, if the piezo-electric element 102 is faulty but the inductor 104 is healthy, the piezo-electric element 102 may not vibrate and there may not be any increase in the load current (B). Further, if both the inductor 104 and piezo-electric element 102 are healthy but the electronic switch 110 is malfunctioning or in a faulty state, again the piezo-electric element 102 may not vibrate and there may not be any increase in the load current (B).

Further, in one or more embodiments, when the sounder device 100 is tested during the second mode of testing, the sounder circuit 100A (the inductor 104 and internal capacitance of the piezo-electric element 102) may act as a load on the capacitor 106, which may continue the lower the voltage level of the capacitor 106 below the threshold voltage level. At the same time, the charge controller 112 may adjust the DAC count to allow more current supply through the capacitor 106 to keep its voltage at the threshold level. This DAC count may eliminate the need for monitoring the current drawn by the sounder circuit 100A during the second mode of testing. Accordingly, if the current drawn by the sounder circuit 100A does not change during the second mode of testing in case any of the components of the sounder circuit 100A malfunction, the capacitor 106 may not be draining any further current from the power source 108 via the charge controller 112. As a result, the DAC count in such a case may be high. Further, if the current drawn by the sounder circuit 100A increases during the second mode of testing in case all the components of the sounder circuit 100A are working or in a healthy state, the capacitor 106 may not be draining any further current from the power source 108 via the charge controller 112. As a result, the DAC count in such cases may be low to maintain the threshold voltage level across the capacitor 106.

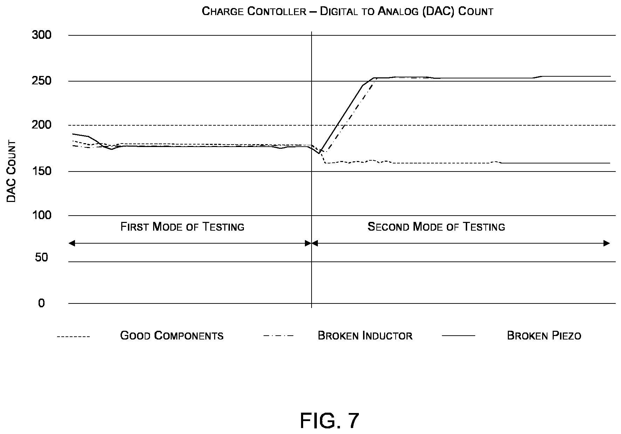

Referring to FIG. 7, exemplary plot depicting the variation in DAC counts during the self-testing mode is disclosed, where the DAC count variation for a healthy (good) sounder device, a sounder device having a faulty capacitor, and a sounder device having a faulty piezo-electric element are depicted using lines of different styles. In one or more embodiments, after completion of the first mode of testing (where the capacitor 106 is charged to 10V, and the frequency of the switch 110 is adjusted to 20 kHz with a duty cycle of 5%, the controller 112 may wait for 50 milliseconds, but not limited to the loke before monitoring the DAC counts or executing the second mode of testing. Further, during the second mode of testing, if the DAC count remains below 200 for 50 milliseconds, the self-testing may be stopped, indicating all the components of the sounder device 100 are functioning correctly. Conversely, if the DAC counts stay above 200 for one second, the self-testing may be aborted and an alert may be generated, indicating a possible failure in one of the components (the inductor 104, the piezo-electric element 102, or the switch).

In one or more embodiments, the controller 112 may be configured to select the predetermined voltage and the predetermined duty cycle for enabling the sounder device 100 to generate a specific sound level based on the regulations of the country or jurisdiction where the sounder device 100 is located or commissioned. In addition, the controller 112 may also be configured to allow the selection of the sound level and tone to be generated or the corresponding predetermined voltage, and the predetermined duty cycle for the sounder device 100, which may allow dynamic adjustment of the sound level and tone generated by the sounder device 100 as per user preference.

Thus, the sounder device 100 may perform self-testing without producing any sound and without using any listing device. In addition, the sounder device 100 may also eliminate yearly testing of the sounder device 100 which may usually require manual operation, thereby reducing cost for the customer. This self-testing may also be used during the manufacturing process which may again save manufacturing costs and check the reliability of the sounder device 100.

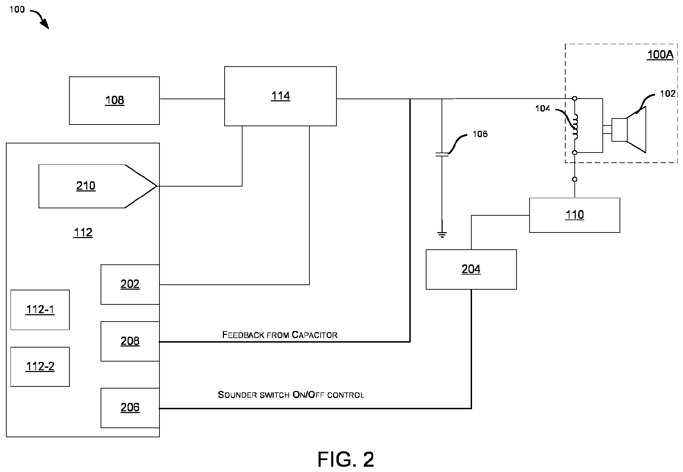

In one or more embodiments, the controller 112 may be in communication with a database (also designated as 112-2 in FIG. 2) storing details of a plurality of permissible sound levels and tones for one or more jurisdictions/countries and corresponding values of one or more known predetermined voltage levels to be supplied across the sounder circuit 100A at one or more known predetermined duty cycles. Accordingly, based on the country or jurisdiction in which the sounder device 100 is installed, the controller 112 may retrieve, from the database, the sound level to be generated, and the corresponding predetermined voltage and the predetermined duty cycle for operating the sounder device 100. Thus, the controller 112 may select, using the database, the predetermined voltage, and the predetermined duty cycle to generate the predefined sound level and tone for the detected or selected jurisdiction.

Further, in one or more embodiments, the controller 112 may be configured to enable one or more registered users (admin or operators) to manually select the predefined sound level and tone to be generated or the operating jurisdiction of the sounder device 100 where it is located or commissioned. Accordingly, the controller 112 may compare the selected predefined sound level or the operating jurisdiction with the database to determine and automatically select the predetermined voltage and the predetermined duty cycle for the sounder device 100 to generate the selected predefined sound level and tone in that jurisdiction. However, in other embodiments, the controller 112 may be configured with a Global Positioning System (GPS) Module or a cloud server that may enable the controller 112 to detect the real-time operating jurisdiction of the sounder device 100 and correspondingly automatically select the predetermined voltage and the predetermined duty cycle to generate the selected predefined sound level and tone in that jurisdiction.

In one or more embodiments, the controller 112 may be in communication with a mobile device (not shown) associated with the registered users via a network. The mobile device may enable the registered users to select the predefined sound level and tone to be generated from the sounder device 100. The mobile device may further enable the registered users to select the operating jurisdiction of the sounder device 100 where it is located or commissioned.

Further, in one or more embodiments, the sounder device 100 may be associated with a fire alarm system. In such embodiments, the controller 112 of the device may be in communication with a control panel associated with the fire alarm system. This control panel may enable the registered users to select the predefined sound level and tone to be generated and/or the operating jurisdiction of the sounder device 100.

Furthermore, in one or more embodiments, the sounder device 100 may be associated with a hazard detection and alarm system. In such embodiments, the controller 112 of the device may be in communication with a server associated with a hazard detection and alarm system. The server may enable the registered users to select the predefined sound level and tone to be generated and/or the operating jurisdiction of the sounder device 100.

Thus, this invention addresses the challenges associated with existing sounder devices by providing an improved, simple, reliable, and cost-effective sounder device that has a non-disruptive testing capability during normal operations and allows for dynamic adjustment of sound levels.

While the invention has been described with reference to exemplary embodiments, it will be understood by those skilled in the art that various changes may be made and equivalents may be substituted for elements thereof without departing from the scope of the invention as defined by the appended claims. Modifications may be made to adapt a particular situation or material to the teachings of the invention without departing from the scope thereof. Therefore, it is intended that the invention not be limited to the particular embodiment disclosed, but that the invention includes all embodiments falling within the scope of the invention as defined by the appended claims.

In interpreting the specification, all terms should be interpreted in the broadest possible manner consistent with the context. In particular, the terms "comprises" and "comprising" should be interpreted as referring to elements, components, or steps in a non-exclusive manner, indicating that the referenced elements, components, or steps may be present, or utilized, or combined with other elements, components, or steps that are not expressly referenced. Where the specification claims refer to at least one of something selected from the group consisting of A, B, C ....and N, the text should be interpreted as requiring only one element from the group, not A plus N, or B plus N, etc.

## Claims

1. A sounder device (100) comprising:

    a sounder circuit (100A) that comprises a piezo-electric element (102);
    a capacitor (106) of a predefined capacitance configured parallel to the sounder circuit, wherein the sounder circuit is connected to the capacitor and a power source (108) via a switch (110); and
    a controller (112) connected to the capacitor, the sounder circuit, and the switch, wherein the controller comprises a control circuitry comprising one or more processors (112-1) with an access to a memory (112-2) storing instructions executable by the one or more processors, which causes the controller to:

       issue a voltage control signal to enable supply of electrical power from the power source to the capacitor to charge the capacitor to a predetermined voltage; and
       issue a first switching control signal to control switching of the switch at a predetermined duty cycle, to enable the capacitor to supply the predetermined voltage across the sounder circuit at the predetermined duty cycle;

    wherein the sounder circuit is configured to generate an acoustic signal of a predefined sound level and tone based on the predetermined voltage being supplied to the sounder circuit at the predetermined duty cycle.

2. The sounder device of claim 1, wherein the sounder circuit comprises an inductor (104) of a predefined inductance configured parallel to the piezo-electric element, wherein the inductor and an internal capacitance of the piezo-electric element creates a resonance circuit (100A) that amplifies the voltage being supplied to or applied across the piezo-electric element.

3. The sounder device of claim 1 or 2, wherein the control circuitry of the controller comprises:

    an analog-to-digital converter, ADC, (208) that enables the controller to monitor a state of charge, SOC, or a voltage across the capacitor; and

a digital-to-analog converter, DAC, (210) that enables the controller to issue the voltage control signal based on the monitored SOC or voltage, and correspondingly enable the supply of electrical power having predefined attributes to the capacitor to charge and maintain the predetermined voltage across the capacitor.

4. The sounder device of claim 1, 2 or 3, wherein the sounder device comprises a capacitor charging control circuit (114) that is configured to control the supply of the electrical power from the power source to the capacitor to charge the capacitor to the predetermined voltage, wherein the controller is configured to issue a second switching control signal to control switching ON and OFF of the capacitor charging control circuit;

and/or, wherein the control circuitry of the controller comprises a pulse width modulator, PWM, (206) that is configured to generate and transmit, upon the issue of the first switching control signal, a PWM signal of the predetermined duty cycle to the switch to control the switching ON and OFF of the switch at the predetermined duty cycle.

5. The sounder device of any preceding claim, wherein the sounder device is configured to be operated in a self-testing mode, which causes the controller to:

enable supply of the predetermined voltage across the sounder circuit while keeping the switch turned OFF or switching the switch at the predetermined duty cycle;
monitor one or more of a current drawn by the sounder circuit, and the voltage across the capacitor;
detect if the monitored current drawn and/or the monitored voltage exceeds a threshold range; and
in response to a positive detection, identify the sounder device to be in a faulty state and correspondingly generate an alert signal;
optionally, wherein in response to a negative detection, the controller is configured to identify the sounder device to be in a healthy state.

6. The sounder device of claim 5, wherein during the self-testing mode, the controller is configured to:

turn OFF the switch and enable the supply of the predetermined voltage across the sounder circuit;
detect if the monitored voltage across the capacitor reaches a threshold voltage level after a predefined time from the supply of the predetermined voltage;
in response to a negative detection, identify the capacitor to be in the faulty state; and
in response to a positive detection, identify the capacitor to be in the healthy state.

7. The sounder device of claims 5 or 6, when dependent on claim 2, wherein during the self-testing mode, the controller is configured to:

operate the switch at the predetermined duty cycle and enable the supply of the predetermined voltage across the sounder circuit, and correspondingly monitor the current drawn by the sounder circuit; and
identify the capacitor, the inductor, the switch, and the piezo-electric element to be in the healthy state upon detecting an increase in the current drawn by the sounder circuit.

8. The sounder device of any of claims 5 to 7, when dependent on claim 2, wherein during the self-testing mode, the controller is configured to:

operate the switch at the predetermined duty cycle and enable the supply of the predetermined voltage across the sounder circuit, and correspondingly monitor the current drawn by the sounder circuit; and
identify one or more of the inductor, the switch, and the piezo-electric element to be in the faulty state upon detecting substantially no increase in the current drawn by the sounder circuit.

9. The sounder device of any of claims 5 to 8, wherein during the self-testing mode, the controller is configured to select the predetermined duty cycle such that the sounder device generates the predefined sound level and tone at a frequency in an inaudible range for humans;
optionally, wherein during the self-testing mode, the controller is configured to control the switching of the switch at the predetermined duty cycle of 5% and operate the piezo-electric element at a predetermined frequency above 20KHz to generate the predefined sound level and tone above 20KHz.

10. The sounder device of any of claims 5 to 9, wherein the controller is configured to operate the sounder device in the self-testing mode at a predefined interval.

11. The sounder device of any preceding claim, wherein the controller is configured to select the predetermined voltage, and the predetermined duty cycle for the predefined sound level and tone to be generated, based on a database storing details of a plurality of permissible sound levels and tones for one or more jurisdictions and corresponding values of one or more known predetermined voltage levels to be supplied across the sounder circuit at one or more known predetermined duty cycles.

12. The sounder device of claim 11, wherein the controller is configured to:

enable one or more users to select the predefined sound level and tone to be generated; and compare the selected predefined sound level and tone with the database to determine and select the predetermined voltage and the predetermined duty cycle to generate the selected predefined sound level and tone; optionally, wherein the controller is in communication with a mobile device associated with the one or more users, which enables the one or more users to select the predefined sound level and tone to be generated.

13. The sounder device of claim 12, wherein the sounder device is associated with a fire alarm system, wherein the controller is in communication with a control panel associated with the fire alarm system, which enables the one or more users to select the predefined sound level and tone to be generated and/or the operating jurisdiction of the sounder device.

14. The sounder device of any of claims 11 to 13, wherein the controller is configured to:

detect or allow selection of a jurisdiction among the one or more jurisdictions where the sounder device is located; and dynamically select, using the database, the predetermined voltage, and the predetermined duty cycle to generate the predefined sound level and tone for the detected or selected jurisdiction.

15. The sounder device of any of claims 12 or 13, or claim 14 when dependent on claim 12 or 13, wherein the sounder device is associated with a hazard detection and alarm system, wherein the controller is in communication with a server associated with the hazard detection and alarm system, which enables the one or more users to select the predefined sound level and tone to be generated and/or the operating jurisdiction of the sounder device.

FIG. 1A

100

112

114

108

106

100A

Z

110

**FIG. 1B**

100

| 100A |
| 108 | 114 | 102 |
| 210 | 104 |
| 112 | 106 |
| 112-1 | 202 | 110 |
| 208 | 204 |
| 112-2 | FEEDBACK FROM CAPACITOR |
| 206 | SOUNDER SWITCH ON/OFF CONTROL |

FIG. 2

CAPACTOR CHARGED VOLTAGE AND PIEZO PEAK-TO PEAK
VOLTAGE 50 % SWITCHING DUTY CYCLE

FIG. 3A

MEASURED SOUND LEVEL @ 3 METER – WITH DIFFERENT TONES
CAPACTOR VOLTGE = 1 TO 16V , SWITCH DUTY CYCLE = FIXED 50%

TONE-1 · TONE-2 · TONE-3 · TONE-4 · TONE-5 · TONE-6 · TONE-7

FIG. 3B

SOUND LEVEL AT FIXED CAPACITOR VOLTAGE = 16 V
SWITCH DUTY CYCLE = 10 TO 50%

FIG. 3C

FIG. 3D

FIG. 3E

ON                                    ON

OFF                          OFF

2.5 MICRO SECOND

48.5
MICRO-SECOND

SWITCHING CONTROL SIGNAL
WAVEFORM

FIG. 4

500

CAPACITOR VOLTAGE

A

FIRST MODE OF TESTING

SECOND MODE OF TESTING

B

CURRENT

INCREASE IN CURRENT AT
20 KHz TONE

C

20 KHz TONE

FIG. 5

600

**CAPACITOR VOLTAGE**

A

FIRST MODE OF TESTING

SECOND MODE OF TESTING

NO CHANGE IN CURRENT DURING 20 KHz TONE

B  CURRENT

C  20 KHz TONE

FIG. 6

CHARGE CONTOLLER – DIGITAL TO ANALOG (DAC) COUNT

FIG. 7

**EUROPEAN SEARCH REPORT**

Application Number

EP 25 18 5016

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/001421 A1 (LESSO JOHN PAUL [GB] ET AL) 6 January 2022 (2022-01-06) | 1-4 | INV.<br>B06B1/02 |
| Y | * paragraphs [0001] - [0144]; figures 1-6 | 11-15 | G08B29/12 |
| A | * | 5-10 | G10K9/122 |
| | ----- | | G10K9/18 |
| X | EP 2 362 379 A1 (NOHMI BOSAI LTD [JP]) 31 August 2011 (2011-08-31) | 1,2,4 | ADD. |
| Y | * paragraphs [0001] - [0127]; figures 1-7 | 11-15 | G08B17/00 |
| A | * | 3,5-10 | |
| | ----- | | |
| X | GB 2 388 916 A (GENT LTD [GB]) 26 November 2003 (2003-11-26) | 1,5,8-10 | |
| Y | * pages 1-18; figures 1-6 * | 11-15 | |
| A | | 2-4,6,7 | |
| | ----- | | |
| Y | CA 3 101 742 A1 (CARRIER CORP [US]) 5 December 2019 (2019-12-05) * paragraphs [0001] - [0053]; figures 1-6 * | 11-15 | |
| | ----- | | |

TECHNICAL FIELDS
SEARCHED (IPC)

G08B
B06B
G10K

The present search report has been drawn up for all claims

| Place of search | Date of completion of the search | Examiner |
|---|---|---|
| The Hague | 28 October 2025 | Gassmann, Martin |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 18 5016

This annex lists the patent family members relating to the patent documents cited in the above-mentioned European search report.
The members are as contained in the European Patent Office EDP file on
The European Patent Office is in no way liable for these particulars which are merely given for the purpose of information.

28-10-2025

| Patent document cited in search report | | | Publication date | Patent family member(s) | | | Publication date |
|---|---|---|---|---|---|---|---|
| US 2022001421 | | A1 | 06-01-2022 | CN | 115668980 | A | 31-01-2023 |
| | | | | GB | 2609850 | A | 15-02-2023 |
| | | | | KR | 20230035251 | A | 13-03-2023 |
| | | | | US | 2022001421 | A1 | 06-01-2022 |
| | | | | US | 2024269706 | A1 | 15-08-2024 |
| | | | | WO | 2022008864 | A1 | 13-01-2022 |
| EP 2362379 | | A1 | 31-08-2011 | CA | 2728828 | A1 | 29-07-2011 |
| | | | | CN | 102157145 | A | 17-08-2011 |
| | | | | EP | 2362379 | A1 | 31-08-2011 |
| | | | | US | 2011187541 | A1 | 04-08-2011 |
| GB 2388916 | | A | 26-11-2003 | NONE | | | |
| CA 3101742 | | A1 | 05-12-2019 | CA | 3101742 | A1 | 05-12-2019 |
| | | | | EP | 3803848 | A1 | 14-04-2021 |
| | | | | US | 2021166670 | A1 | 03-06-2021 |
| | | | | WO | 2019231700 | A1 | 05-12-2019 |

EPO FORM P0459

For more details about this annex : see Official Journal of the European Patent Office, No. 12/82